# EUROPEAN PATENT APPLICATION

(11) **EP 4 675 436 A1**
(43) Date of publication of application: **07.01.2026**
(21) Application number: 23785970.7
(22) Date of filing: 18.05.2023
(51) Int. Cl.: G06F 9/54, G06F 16/957

(54) **BROWSER PAGE DISPLAY METHOD, ELECTRONIC DEVICE, AND STORAGE MEDIUM**

(30) Priority: 28.02.2023 CN 202310189057
(71) Applicant: Wangsu Science & Technology Co., Ltd., Shanghai 200030 (CN)
(72) Inventor: The designation of the inventor has not yet been filed
(74) Representative: Balder IP Law, S.L.
(86) International application number: PCT/CN2023/095123
(87) International publication number: WO 2024/178849

(57) **Abstract**

Embodiments of the present disclosure relate to cybersecurity technology, and disclose a method for displaying browser pages, an electronic device and a storage medium. The method for displaying the browser pages is applied to a proxy server. The proxy server includes a remote browser. The method includes: acquiring first pixel data corresponding to change regions according to a page currently displayed by the remote browser and compressing the first pixel data to obtain second pixel data; sending the second pixel data to a client, such that the client displays a corresponding browser page according to the second pixel data; acquiring third pixel data corresponding to the change regions according to the page currently displayed by the remote browser, the third pixel data being configured to supplement pixels lost when compressing the first pixel data; and sending the third pixel data to the client, such that the client displays a corresponding browser page according to the third pixel data. The method is at least conducive to improving the browsing interaction experience of users.

## Description

### CROSS-REFERENCE TO RELATED APPLICATIONS

The present application claims priority to Chinese Patent Application No. 202310189057.X, filed on February 28, 2023, which is incorporated by reference herein in its entirety.

### TECHNICAL FIELD

The various embodiments described in this document relate in general to cybersecurity technology, and in particular to a method for displaying browser pages, an electronic device and a storage medium.

### BACKGROUND

Web services are subjected to more security risks because of openness, diversity of source station technologies and complexity of terminal environments. Web security has always been the main research direction in existing cybersecurity. Remote Browser Isolation (RBI) technology is an important means that is currently proposed to ensure Web security when browsing web pages. The RBI technology is implemented in such a manner that browser pages returned by a source station are transmitted to a remote browser in a proxy server for display, what a client receives is pixel data of the browser pages displayed by the remote browser, such that the source station and the client are prevented from direct interaction and isolated from each other, thereby finally realizing the purpose of ensuring Web security.

However, an existing browser display method based on RBI brings poor browsing interaction experience to users.

### SUMMARY

Embodiments of the present disclosure are intended to provide a method for displaying browser pages, an electronic device and a storage medium, which are at least conducive to improving browsing interaction experience of users.

According to some embodiments of the present disclosure, in an aspect, a method for displaying browser pages, which is applied to a proxy server, is provided. The proxy server includes a remote browser. The method includes: acquiring first pixel data corresponding to change regions according to a page currently displayed by the remote browser and compressing the first pixel data to obtain second pixel data; sending the second pixel data to a client, such that the client displays a corresponding browser page according to the second pixel data; acquiring third pixel data corresponding to the change regions according to the page currently displayed by the remote browser, the third pixel data being configured to supplement pixels lost when compressing the first pixel data; and sending the third pixel data to the client, such that the client displays a corresponding browser page according to the third pixel data.

According to some embodiments of the present disclosure, in another aspect, a method for displaying browser pages, which is applied to a client, is provided. The client includes a local browser. The method includes: receiving second pixel data; replacing and displaying change regions as the second pixel data in a page currently displayed by the local browser; receiving third pixel data; and displaying a to-be-displayed browser page in the local browser according to the third pixel data; pixel data corresponding to the to-be-displayed browser page in the change regions being first pixel data, the second pixel data being compressed data of the first pixel data, and the third pixel data being configured to supplement pixels lost when compressing the first pixel data.

According to some embodiments of the present disclosure, in yet another aspect, an electronic device is provided. The electronic device includes at least one processor, and a memory in communication connection with the at least one processor. The memory stores instructions capable of being executed by the at least one processor, and the instructions, when executed by the at least one processor, causes the at least one processor to implement the method for displaying the browser pages as described in any above aspects.

According to some embodiments of the present disclosure, in still another aspect, a computer-readable storage medium, on which a computer program is stored, is provided. The computer program, when executed by a processor, causes the processor to implement the method for displaying the browser pages as described in any above aspects.

The technical solutions provided by the embodiments of the present disclosure at least have the following beneficial effects:
The second pixel data is obtained by compressing the first pixel data corresponding to the change regions in the page currently displayed by the remote browser, thus, compared with pixel data of the whole page currently displayed by the remote browser, the data volume of the second pixel data is relatively less, the second pixel data can be more rapidly transmitted to the client, accordingly, contents displayed in the change regions can be efficiently synchronized to the client, a complete browser page is displayed by the contents together with other unchanged regions, such that the users are allowed to obtain complete browser page information. Moreover, the third pixel for supplementing the pixels lost when compressing the first pixel data is sent on the basis of sending the second pixel data, such that the client can supplement the second pixel data according to the third pixel data, so as to display lossless pixel data of the change regions, and the users are allowed to acquire lossless browser page information. The method is also conducive to reducing time delay for the users to obtain the page information under the condition of displaying clear pages, thereby improving the browsing interaction experience of the users.

### BRIEF DESCRIPTION OF THE DRAWINGS

One or more embodiments are exemplarily described with reference to figures in drawings corresponding thereto, these exemplary descriptions do not constitute limitations to the embodiments, elements with the same reference signs in the drawings represent similar elements, and unless otherwise specified, the figures in the drawings do not constitute a scale limitation.
FIG. 1 is a flowchart of a method for displaying browser pages provided in an embodiment of the present disclosure;
FIG. 2 is a flowchart of a method for displaying browser pages including an operation of monitoring a page change event, as provided in an embodiment of the present disclosure;
FIG. 3 is a flowchart of a method for displaying browser pages including an operation of determining a compression rate, as provided in an embodiment of the present disclosure;
FIG. 4 is a flowchart of a method for displaying browser pages including an operation of acquiring second tasks based on a timer, as provided in an embodiment of the present disclosure;
FIG. 5 is a flowchart of a method for displaying browser pages including an operation of detecting a second task queue, as provided in an embodiment of the present disclosure;
FIG. 6 is a flowchart of a method for displaying browser pages including an operation of detecting whether delay exists, as provided in an embodiment of the present disclosure;
FIG. 7 is a flowchart of a method for displaying browser pages including an operation of dividing change regions, as provided in an embodiment of the present disclosure;
FIG. 8 is an interaction schematic diagram among internal flows of a proxy server associated with a method for displaying browser pages, as provided in an embodiment of the present disclosure;
FIG. 9 is a flowchart of a method for displaying browser pages including an operation of receiving second pixel data, as provided in an embodiment of the present disclosure; and
FIG. 10 is a schematic structural diagram of an electronic device provided in an embodiment of the present disclosure.

### DETAILED DESCRIPTION OF THE EMBODIMENTS

It can be known from the background that browsing interaction experience of users in an existing method for displaying browser pages based on RBI is desired to be improved.

After analysis, it can be known that one of the reasons for the poor browsing interaction experience of the users in the method for displaying the browser pages based on RBI is that what RBI synchronizes to a client is pixel data of a complete page displayed by a remote browser, the data volume transmitted in this process is large, the client needs to load more data, the users need to wait for a long time, and real-time browsing interaction response is poor, resulting in poor user experience.

According to technical solutions provided by embodiments of the present disclosure, pixel data corresponding to change regions is sent instead of sending the pixel data of the complete page to the client every time, at this time, the client already has pixel data of other unchanged regions, which will not affect the completeness of information acquired by the users. Moreover, the pixel data corresponding to the change regions is sent twice, second pixel data obtained by compressing first pixel data corresponding to the change regions is sent firstly, the data volume is less, such that new information can be more rapidly displayed to the users; then third pixel data for supplementing pixels lost by the second pixel data is sent, such that the users can obtain clear browsing information finally; and real-time performance and clearness of browsing interaction of the users are taken into consideration, thereby facilitating the improvement in the browsing interaction experience of the users.

To make the objectives, technical solutions, and advantages of the embodiments of the present disclosure clearer, each embodiment of the present disclosure will be described in details below with reference to the drawings. However, those ordinarily skilled in the art should understand that more technical details are proposed in each embodiment of the present disclosure in order to allow readers to better understand the present disclosure. However, the technical solutions claimed by the present disclosure can be realized even if no technical details or various changes and modifications to the following embodiments are available.

The division of each following embodiment is to facilitate the description, which should not constitute any limitation to specific implementations of the present disclosure, and the embodiments can be mutually combined and referred to on the premise of no contradiction.

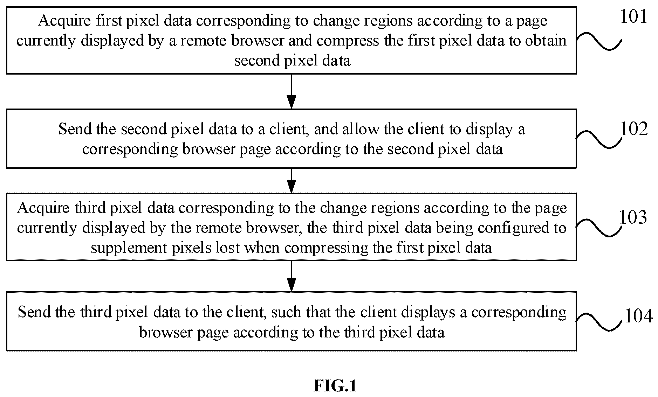

In one aspect, an embodiment of the present disclosure provides a method for displaying browser pages, applied to a proxy server including a remote browser. The remote browser is defined relative to a local browser of a client, which is emphasized as not being the same browser as the local browser deployed in the client, and the proxy server may be any one of or a number of proxy-enabled server devices in which remote browsers are deployed. In some embodiments, a flowchart of the method for displaying the browser pages is shown in FIG. 1, including the following operations.

In 101, first pixel data corresponding to change regions is acquired according to a page currently displayed by the remote browser and is compressed to obtain second pixel data.

In some embodiments, the change regions are regions in the page displayed by the remote browser where the change is made relative to previously displayed contents. The first pixel data corresponding to the change regions refers to data obtained when contents shown in the change regions of the page currently displayed by the remote browser are represented in a form of image. For example, a certain browser page is divided into three regions of A, B and C, contents displayed in the three regions of A, B and C are a1, b1 and c1 respectively at a moment T1, contents displayed in the three regions of A, B and C are a2, b2 and c1 respectively at a moment T1+ΔT (ΔT is greater than 0), and the change regions are Region A + Region B at this time.

It should be noted that the embodiment does not limit a change manner, which may be content change in the complete displayed page, such as reloading the page by the remote browser during page redirection; or content change in a part of the displayed page, such as pop-up of a dialog box during authentication. During user browsing, all regions that change in the page currently displayed by the remote browser relative to a previous page completely synchronized to the client may be taken as the change regions. At an initial user browsing moment, the page currently displayed by the remote browser may be taken as the change regions.

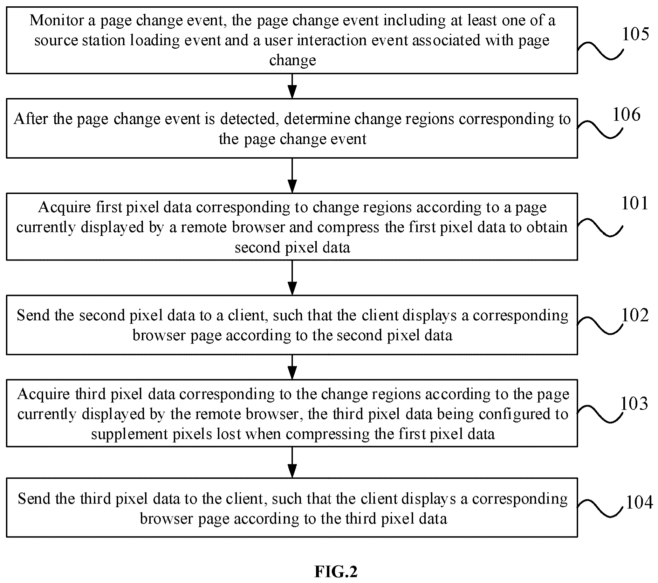

In some embodiments, as shown in FIG. 2, before acquiring the first pixel data corresponding to the change regions relative to the previous displayed page according to the page currently displayed by the remote browser, the method for displaying the browser pages further includes:
In105, a page change event is monitored. The page change event includes at least one of a source station loading event and a user interaction event associated with page change.

In some embodiments, monitoring may be realized in a plurality of manners, such as detecting contents returned by a source station and detecting user instructions, which will not go into all the details here.

In 106, after monitoring the page change event, the change regions corresponding to the page change event are determined.

When the user just starts browsing, the page is required to be initially loaded, the page changes at this time, and the change corresponds to the source station loading event. When the user browses, a change in the page at this time is usually caused by user interaction. That is, the source station loading event and the user interaction event associated with page change contain initial loading and browsing processes after initial loading, which is conducive to unifying the determination of change regions of the page in initial loading and non-initial loading processes, thereby lowering difficulty in realizing page display in the whole browsing process.

It also should be noted that the embodiment does not limit a compression manner, which may be any processing manner of reducing the data volume of the first pixel data and still displaying the reduced pixel data, such as chroma sampling and coding transformation. In some examples, the first pixel data may further be subjected to transformation of data formats to obtain the second pixel data, so as to reduce the data volume, which will not go into all the details here.

In some embodiments, a compression rate adopted when compressing the first pixel data may be a dynamic value, a pixel loss degree of the second pixel data relative to the first pixel data can be adjusted accordingly, such that a flexible and variable effect can be presented at the client, thereby facilitating the improvement in the user experience.

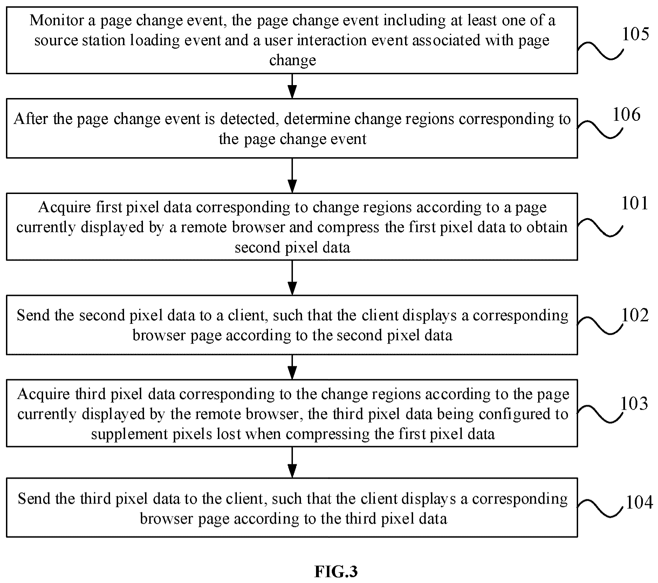

In some embodiments, as shown in FIG. 3, the flowchart of the method for displaying the browser pages further includes the following operations.

In 107, the compression rate is determined according to a current working pressure of the proxy server.

In some embodiments, the working pressure includes at least one of a transmission pressure and a processing pressure.

Correspondingly, operation 101 may be realized in the following manner. The first pixel data corresponding to the change regions is acquired according to the page currently displayed by the remote browser and is compressed according to the compression rate to obtain the second pixel data.

That is, the compression rate is associated with the working pressure of the proxy server, which can adapt to the working pressure of the proxy server, such that the first pixel data can be compressed at the appropriate compression rate under the condition of fully utilizing various resources, the data volume can be better reduced while not affecting working efficiency, change in pixels in the change regions can be better synchronized to the client, and therefore the presentation effect and user experience of the client are improved.

It should be noted that only realizing operation 101 after operation 107 is taken as an example for illustration in FIG. 3. In some embodiments, operation 107 may be performed after or at the same time as acquiring the first pixel data corresponding to the change regions according to the page currently displayed by the remote browser, which will not be repeated here.

In some embodiments, the transmission pressure may be associated with at least one of transmission of the second pixel data and transmission of third pixel data. Thus, the compression rate is associated with the sending condition of the second pixel data and the third pixel data, which is conducive to fully utilizing sending resources to efficiently send the second pixel data obtained after compression to the client, the situation that the data volume of the second pixel data exceeds the supportable data sending volume of the current sending sources due to too small compression rate, which affects sending efficiency of the second pixel data can be avoided, and the situation that the current sending resources are redundant due to too large compression rate can also be avoided.

In some embodiments, after sending the second pixel data, the method for displaying the browser pages further includes: the transmission pressure is updated according to the sending condition of the second pixel data. That is, the subsequent sending condition of sending, by the proxy server, the second pixel data is predicted based on the current sending condition of the second pixel data. Since the reference sending condition and the predicted sending condition are both associated with the second pixel data, the current sending condition of the second pixel data has higher reference and prediction accuracy, thereby facilitating the improvement in accuracy of the compression rate.

In some embodiments, after sending the third pixel data, the method for displaying the browser pages further includes: the transmission pressure is updated according to the sending condition of the third pixel data. Sending of the third pixel data is close to next sending of the second pixel data in time, and real-time performance of describing information such as network states during sending is relatively high, thereby facilitating the improvement in the accuracy of the compression rate.

It should be noted that the method for displaying the browsers further includes: the transmission pressure is updated according to the sending condition of the second pixel data, and the transmission pressure is updated according to the sending condition of the third pixel data. Thus, updating frequency of the transmission pressure is increased, and real-time performance of the recorded transmission pressure is improved, which is conducive to improving the accuracy of the transmission pressure.

In some examples, in order to simplify the updating process of the transmission pressure, related parameters obtained in the sending process of the second pixel data and/or the third pixel data can be used for representing the transmission pressure, for example, the transmission pressure is represented by round trip time (RTT), sending delay, channel utilization rate and packet loss rate.

Of course, the above description is only an example of updating the transmission pressure. In some embodiments, the transmission pressure may further be associated with other transmission processes of the proxy server, for example, the transmission pressure may further be associated with the transmission condition during an interaction between the proxy server and the source station, which can further increase the updating frequency of the transmission pressure, improve the real-time performance of the transmission pressure, and thus improve the accuracy of the compression rate, which will not go into all the details here.

In some embodiments, the processing pressure may be associated with the process of processing, by the proxy server, at least one of the first pixel data, the second pixel data, the third pixel data and the like. Thus, the compression rate is associated with processing of the first pixel data, the second pixel data, the third pixel data and the like, which is conducive to fully utilizing processing sources, such as a central processing unit (CPU) and storage resources. Processing efficiency among the first pixel data and processing efficiency among the first pixel data, the second pixel data and the third pixel data are balanced, overall efficient processing is realized, and overall delay can be shortened, thereby improving the user experience.

In some embodiments, the processing processes of the first pixel data, the second pixel data and the third pixel data are represented in a form of tasks, thus, the magnitude of the processing pressure can be measured according to the quantity of the tasks, and representation of the processing pressure can be simplified, thereby improving updating efficiency and lowering implementation difficulty of the processing pressure.

In order to enable those skilled in the art to better understand the description, updating the processing pressure by representing processing of the first pixel data as the tasks is taken as an example for illustration.

In some embodiments, before acquiring the first pixel data corresponding to the change regions according to the page currently displayed by the remote browser, the method for displaying the browser pages further includes: first tasks are added to a preset first task queue after determining that the change regions are available; the first task being used for triggering corresponding instructions to execute the acquisition of the first pixel data corresponding to the change regions corresponding to the currently-acquired first tasks according to the page currently displayed by the remote browser.

That is, an instruction of adding the first tasks to the preset first task queue is triggered by determining the change regions, so as to trigger the corresponding instructions to execute the acquisition of the first pixel data corresponding to the change regions corresponding to the currently-acquired first tasks according to the page currently displayed by the remote browser.

Correspondingly, before determining the compression rate according to the current working pressure of the proxy server, the method for displaying the browser pages further includes: the processing pressure is determined according to the quantity of the first tasks in the first task queue.

Thus, the processing pressure is updated according to the quantity of tasks that need to be processed and are related to the first pixel data. Considering that processing of the first pixel data is mainly compression processing, the above process is actually to represent the processing pressure according to the quantity of the compression tasks accordingly, that is, the compression rate is determined according to the quantity of the compression tasks, a plurality of compression tasks can be balanced, which can be overall efficiently processed, and later compression processing is prevented from being affected by former compression processing, thereby facilitating the improvement in the user experience.

Of course, in some embodiments, the processing processes of the second pixel data and the third pixel data may further be represented as the tasks, the compression rate is updated accordingly, such that processing of the first pixel data and subsequent processing of the second pixel data and the third pixel data have adaptive efficiency, thereby synchronizing the second pixel data and the third pixel data to the client smoothly and efficiently, which is conducive to improving the user experience.

In some embodiments, the processing pressure may further be associated with the volume of data processed. Thus, the compression rate is associated with the volume of data processed, and different compression rates can be provided for different data volumes, which is conducive to providing relatively stable processing time on the basis of different processing data volumes, and the client can be better controlled to display delay of corresponding browser pages, thereby improving the user experience.

In some embodiments, before determining the compression rate according to the current working pressure of the proxy server, the method for displaying the browser pages further includes: the processing pressure is determined according to sizes of all the change regions in which no corresponding first pixel data is acquired currently.

That is, the data volume that needs to be processed is represented by the sizes of the change regions, which is visual and simple, and therefore the difficulty in measuring the processing data volume can be lowered. The sizes of all the non-processed (i.e., no corresponding first pixel data is acquired) change regions are acquired, such that all the current change regions that need to be processed are considered, which is conducive to realizing overall high efficiency.

Of course, in some embodiments, the processing pressure may further be updated according to the sizes of the change regions corresponding to the first pixel data that needs to be compressed currently, and more attention is paid to current tasks, which is conducive to efficiently processing the current first pixel data. Alternately, the processing pressure is updated according to the data volume of the first pixel data, and the data volume of the first pixel data can more accurately describe the processing workload, which is conducive to more accurately determining the compression rate and the like and will not be repeated here.

In 102, the second pixel data is sent to the client, such that the client is allowed to display a corresponding browser page according to the second pixel data.

In some embodiments, a sending manner is not limited, which may include encrypted sending, non-encrypted sending or sending via a private channel.

In 103, the third pixel data corresponding to the change regions is acquired according to the page currently displayed by the remote browser. The third pixel data is used for supplementing pixels lost when compressing the first pixel data.

In some embodiments, a supplementing manner of the third pixel data for the pixels lost when compressing the first pixel data is not limited, and correspondingly, meanings and contents of the third pixel data also differ accordingly according to different supplementing manners.

In some examples, the third pixel data may contain the pixels lost when compressing the first pixel data, such that the third pixel data and the second pixel data are combined to obtain the first pixel data, thereby supplementing pixel loss caused when the first pixel data is compressed.

In some examples, the third pixel data may further contain complete first pixel data, such that the third pixel data can overcome the pixel loss caused when the first pixel data is compressed.

In some examples, the third pixel data may further be some specifically-processed data, such that the third pixel data can cooperate with the second pixel data to restore the first pixel data.

Of course, the above description is only specific exemplary illustration, and in some examples, the third pixel data may further be any other data for supplementing the pixels lost when the first pixel data is compressed, which will not go into all the details here.

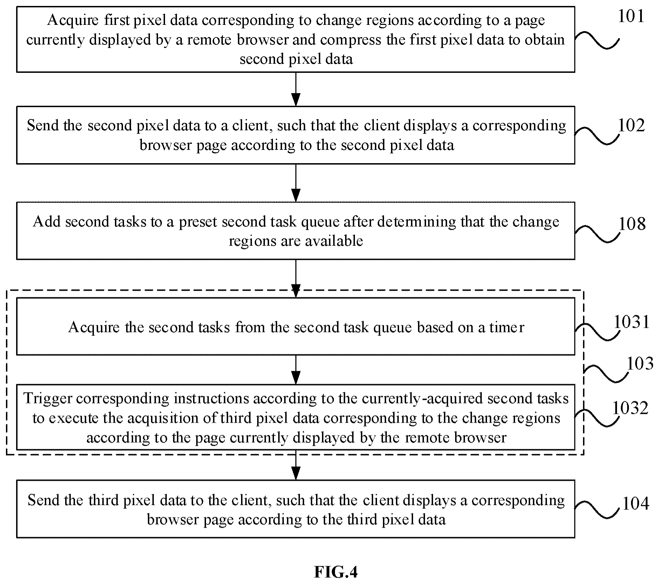

In some embodiments, as shown in FIG. 4, before generating the third pixel data according to the page currently displayed by the remote browser, the method for displaying the browser pages further includes:
In 108, second tasks are added to a preset second task queue after determining that the change regions are available.

That is, adding the second tasks to the second task queue is triggered and executed by determining the change regions.

Correspondingly, acquiring the third pixel data corresponding to the change regions according to the page currently displayed by the remote browser may be realized through the following operations.

In 1031, the second tasks are acquired from the second task queue based on a timer.

In 1032, corresponding instructions are triggered according to the currently-acquired second tasks to execute the acquisition of the third pixel data corresponding to the change regions according to the page currently displayed by the remote browser.

That is, the second tasks are not immediately read and executed after being added, but are regularly triggered by the timer to be read, such that reading and executing the second tasks may be implemented asynchronously with compression of the first pixel data after determining the change regions, thereby ensuring a sending sequence that the second pixel data is sent prior to the corresponding third pixel data.

It should be understood that the second pixel data is obtained by compressing the first pixel data, that is, an image displayed by the second pixel data is an image with a low resolution; while after the third pixel data supplements the pixels lost when compressing the first pixel data, a displayed image is an image with a high resolution. Thus, the image with the low resolution may be displayed prior to the image with the high resolution by sending the second pixel data prior to the third pixel data, such that the situation that the image with the high resolution is displayed prior to the image with the low resolution is avoided, thereby facilitating the improvement in a display effect of the browser pages and the user experience.

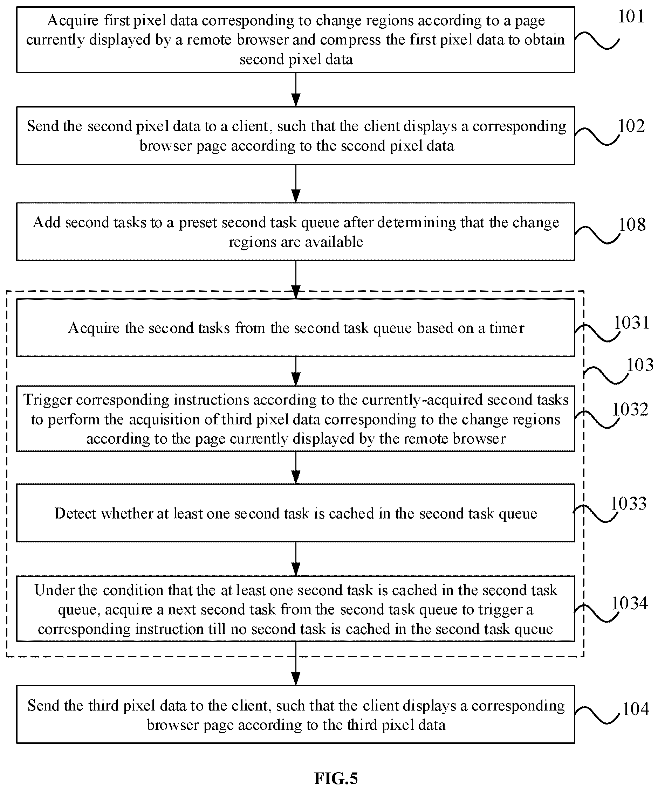

In some embodiments, as shown in FIG. 5, acquiring the second tasks from the second task queue based on the timer may be realized in the following manner: the second tasks are acquired from the second task queue after the timer is triggered.

Moreover, after triggering the corresponding instructions according to the currently-acquired second tasks to execute the acquisition of the third pixel data corresponding to the change regions according to the page currently displayed by the remote browser, the method for displaying the browser pages further includes:
In 1033, whether at least one second task is cached in the second task queue is detected.

That is, whether a second task waiting to be executed exists is detected after one second task is executed.

In 1034, under the condition that the at least one second task is cached in the second task queue, a next second task is acquired from the second task queue to trigger a corresponding instruction till no second task is cached in the second task queue.

That is, a next second task waiting to be executed may continue to be executed if it is detected that a second task that needs to be executed exists after one second task is executed.

With reference to "the second tasks are acquired from the second task queue after the timer is triggered", it can be known that in some embodiments, the second tasks in the second task queue wait for the timer being triggered actually, the second tasks in the second task queue start to be sequentially read and executed after the timer is triggered till no second task waiting to be executed exists in the second task queue, and then if a second task is added to the second task queue again, the second task will wait for the timer being triggered next time.

It should be noted that a triggering mechanism of the timer may have a plurality of manners, for example, the timer may be continuously switched on, such that the timer is triggered at a certain interval, if a second task has already been executed at this time, no new second task is read, and if the second task is not executed currently, the second task starts to be read from the second task queue. Alternately, the timer is switched on after sequentially reading and executing the second queue and triggered at a certain interval, the timer is switched off after at least one second task exists in the second task queue, and the timer is switched on again after all the second tasks in the second task queue are executed.

Thus, compared with a manner of triggering, by the timer, the second tasks one by one, by means of sequential executing of triggering, by the timer, the second tasks, executing efficiency can be improved when a plurality of second tasks wait to be executed, and the problem that a next second task has started when a triggering action of a former second task has not been completed yet, resulting in confused displayed contents can be avoided.

It should further be noted that FIG. 5 only takes performing operation 1033 and operation 1034 before operation 104 as an example, in some embodiments, operation 1033 and operation 1034 may be performed after or at the same time as operation 104, and operation 104 may also be performed between operation 1033 and operation 1034, which will not be repeated here.

Of course, in some embodiments, the timer may trigger the second tasks to be read and executed one by one.

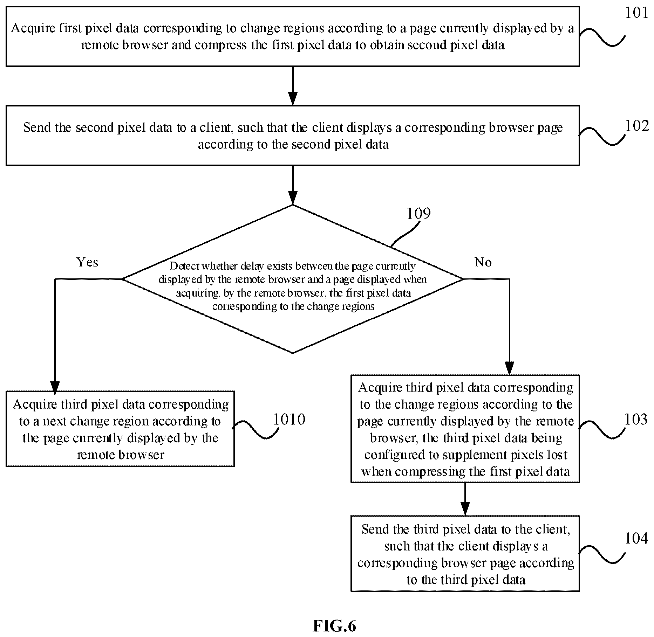

It should be understood that the second pixel data and the third pixel data are obtained respectively according to the pages displayed by the remote browser when they are generated, and in some cases, page contents displayed by the remote browser in the change regions may be inconsistent. With respect to these conditions, in some embodiments, as shown in FIG. 6, before acquiring the third pixel data corresponding to the change regions according to the page currently displayed by the remote browser, the method for displaying the browser pages further includes:
In 109, whether delay exists between the page currently displayed by the remote browser and a page displayed when acquiring, by the remote browser, the first pixel data corresponding to the change regions is detected.

That is, whether delay exists between the pages displayed by the remote browser when the second pixel data and the third pixel data are generated respectively is detected.

In some cases, the occurrence of delay indicates that the page currently displayed by the remote browser is inconsistent with the page displayed by the remote browser when acquiring the first pixel data corresponding to the change regions.

In some cases, the occurrence of delay indicates that a time difference between the page currently displayed by the remote browser and the page displayed by the remote browser when acquiring the first pixel data corresponding to the change regions goes beyond preset time.

In some cases, the occurrence of delay indicates that a preset number of pages with different contents are spaced between the page currently displayed by the remote browser and the page displayed by the remote browser when acquiring the first pixel data corresponding to the change regions.

Of course, the above description is only specific exemplary illustration, and in some cases, it may further be set according to requirements, which will not go into all the details here.

Correspondingly, acquiring the third pixel data corresponding to the change regions according to the page currently displayed by the remote browser is implemented under the condition that no delay exists.

The following operations may be implemented under the condition that delay exists:
In 1010, next third pixel data corresponding to the change regions is acquired according to the page currently displayed by the remote browser.

Each change region corresponds to the second pixel data and the third pixel data. When delay exists between a browser page when certain second pixel data is generated and a browser page when corresponding third pixel data is generated, the second pixel data and the third pixel data are no longer corresponding to an image with a low resolution and an image with a high solution of the same contents. Thus, the next third pixel data corresponding to change regions starts to be processed instead of acquiring the third pixel data obtained by the change region based on contents of the page currently displayed by the remote browser, so that generation and sending of invalid data is reduced, which is conducive to saving resources and accelerating subsequent processing of the third pixel data corresponding to the change regions, and undelayed third pixel data is sent to the client in time, thereby improving the user experience.

The problem of reduced user experience caused by the fact that delayed browser page pixel data is sent to the client can be reduced by means of delay detection.

Of course, in some embodiments, under the condition that delay exists, the processing quantity of the change regions in which the corresponding third pixel data needs to be generated can further be detected, and under the condition that the processing quantity does not go beyond a preset value, the third pixel data of the current change region is acquired, which will not go into all the details here.

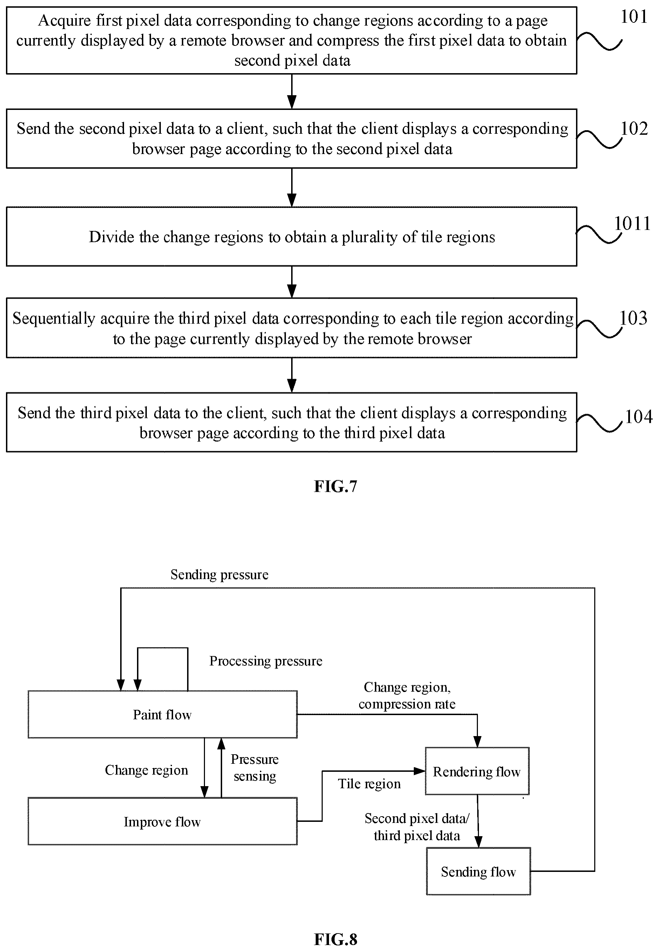

In some embodiments, as shown in FIG. 7, before acquiring the first pixel data corresponding to the change regions according to the page currently displayed by the remote browser, the method for displaying the browser pages further includes:
In 1011, the change regions are divided to obtain a plurality of tile regions.

Correspondingly, operation 103 is realized in the following manner: the third pixel data corresponding to each tile region is sequentially acquired according to the page currently displayed by the remote browser.

In some cases, division granularity can be flexibly adjusted according to the processing pressure of the second pixel data and/or the third pixel data, which will not go into all the details here.

That is, the change regions are tiled, and the corresponding third pixel data is acquired and sent based on each tiled region, which is conducive to reducing the processing pressure and the transmission pressure of the third pixel data and more efficiently synchronizing the third pixel data to the client.

In 104, the third pixel data is sent to the client, such that the client is allowed to display a corresponding browser page according to the third pixel data.

In some embodiments, the sending manner is not limited, which may include encrypted sending, non-encrypted sending or sending via the private channel.

In order to allow those skilled in the art to better understand the method for displaying the browser pages provided by the above embodiments, the method is illustrated with an example below.

As shown in FIG. 8, two flows, namely a paint flow and an improve flow are deployed in the remote browser of the proxy server. When the page change event occurs, the paint flow is triggered to determine the change regions corresponding to the page change event at this time, the first tasks are added to the first task queue. Then, the determination of the compression rate and a rendering flow are asynchronously triggered, and corresponding instructions are triggered, so as to add the second tasks to the second task queue. Thus, the second pixel data is generated in the rendering flow according to the compression rate that is determined previously, the page change regions and the page currently displayed by the remote browser and sent to the corresponding client in a sending flow through a sending interface. When timing added when a remote browser window is created is triggered, the improve flow is triggered to execute the second tasks, and the corresponding third pixel data is generated, and sent to the corresponding client in the sending flow through the sending interface.

Herein, the improve flow may further reversely sense the processing pressure of the paint flow to tile the change regions, such that the third pixel data corresponding to each tile region is obtained. Moreover, the second tasks in the second task queue may further be optimized by the improve flow according to the change condition of the page displayed by the remote browser, that is, the third pixel data corresponding to the next change region is acquired under the condition that delay exists in the above embodiments, instead of acquiring the third pixel data of the currently processed change region.

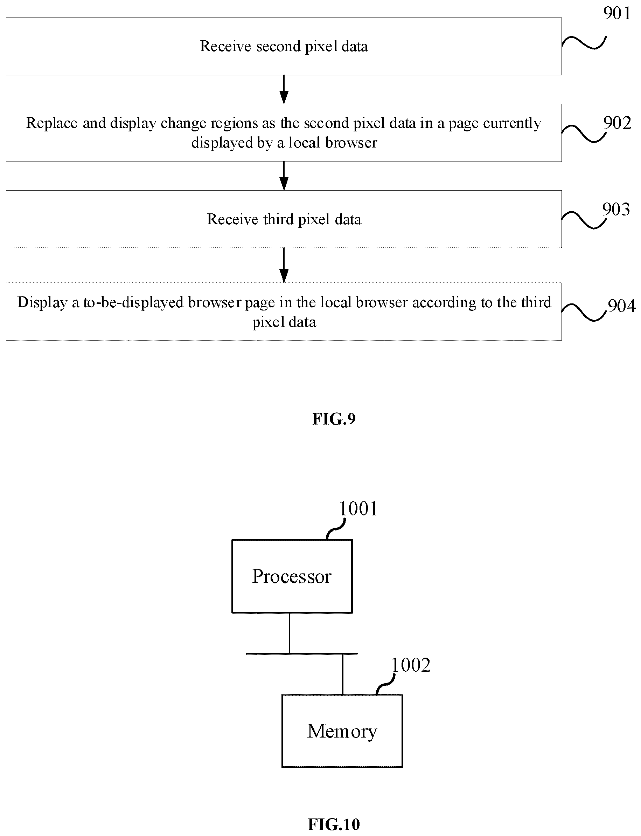

In one aspect, an embodiment of the present disclosure further provides a method for displaying browser pages, applied to a client including a local browser. The client may be an electronic device in which a browser can be deployed. In some embodiments, a flowchart of the method for displaying the browser pages is shown in FIG. 9, including the following operations.

In 901, second pixel data is received.

In 902, change regions are replaced and displayed as the second pixel data in a page currently displayed by the local browser.

In some embodiments, pixel data corresponding to the page currently displayed by the local browser includes another second pixel data or another third pixel data. That is, the page currently displayed by the local browser may be an image displayed after receiving second pixel data corresponding to a certain change region, or an image displayed after receiving third pixel data corresponding to a certain change region.

In 903, third pixel data is received.

In 904, a to-be-displayed browser page is displayed in the local browser according to the third pixel data.

In some embodiments, pixel data corresponding to the change regions in the to-be-displayed browser page is first pixel data, the second pixel data is compressed data of the first pixel data, and the third pixel data is used for supplementing pixels lost when compressing the first pixel data.

That is, the local browser firstly displays the second pixel data obtained after compressing the first pixel data in the change regions and then displays the third pixel data in the change regions, such that the display effect of the first pixel data is finally presented in the change regions.

It should be noted that in some embodiments, meanings of the change regions, the second pixel data and the third pixel data correspond to those in the above embodiments, which will not be repeated here.

It should be understood that implementations of operation 904 may be different according to different pieces of the third pixel data. For example, when the third pixel data includes complete first pixel data, the third pixel data may be displayed in the change regions. When the third pixel includes pixels lost when the first pixel data is compressed, the third pixel data is combined with the second pixel data to restore the first pixel data before display and other operations.

The operations of the above methods are divided only for clear description, which may be combined into one operation or split certain operations to be decomposed into a plurality of operations during implementation, and all the operations fall within the protection scope of the patent as long as they include the same logic relationship. The algorithms or flows with insignificant modifications or insignificant design fall within the protection scope of the patent as long as they do not change key design of the algorithms and flows.

In another aspect, an embodiment of the present disclosure further provides a proxy server, including:
A first processing module, configured to acquire first pixel data corresponding to change regions according to a page currently displayed by a remote browser and compress the first pixel data to obtain second pixel data.
A second processing module, configured to acquire third pixel data corresponding to the change regions according to the page currently displayed by the remote browser, the third pixel data being used for supplementing pixels lost when compressing the first pixel data.

A sending module, configured to send the second pixel data to a client, such that the client is allowed to display a corresponding browser page according to the second pixel data; and send the third pixel data to the client, such that the client is allowed to display a corresponding browser page according to the third pixel data.

In yet another aspect, an embodiment of the present disclosure further provides a client, including:
A receiving module, configured to receive second pixel data; and receive third pixel data.

A display module, configured to replace and display change regions as the second pixel data in a page currently displayed by a local browser; and display a to-be-displayed browser page in the local browser according to the third pixel data.

Herein, pixel data corresponding to the change regions in the to-be-displayed browser page is first pixel data, the second pixel data is compressed data of the first pixel data, and the third pixel data is used for supplementing pixels lost when compressing the first pixel data.

It is not difficult to find that the above two embodiments are apparatus embodiments corresponding to the method embodiments, and can cooperate with the method embodiments for implementation. Related technical details mentioned in the method embodiments are still valid in the above two embodiments, which will not be repeated here in order to reduce repetitions. Correspondingly, related technical details mentioned in the above two embodiments can also be applied to the method embodiments.

It is worth noting that modules referred to in the two embodiments are all logic modules, and in practical application, one logic unit may be one physical unit, or a part of one physical unit, or be implemented through the combination of a plurality of physical units. In addition, in order to highlight the innovative part of the present disclosure, the above two embodiments do not introduce units that are less closely associated with solving the technical problems raised in the present disclosure, however, this does not mean that other units do not exist in the above two embodiments.

In still yet another aspect, an embodiment of the present disclosure further provides an electronic device as shown in FIG. 10, including: at least one processor 1001, and a memory 1002 in communication connection with the at least one processor 1001. The memory 1002 stores instructions capable of being executed by the at least one processor 1001, and the instructions, when executed by the at least one processor 1001, cause the at least one processor 1001 to implement the method described in any above method embodiment.

Herein, the memory 1002 is connected with the processors 1001 through a bus, and the bus may include any quantity of interconnected buses and bridges, and various circuits of the one or more processors 1001 and the memory 1002 are connected together through the buses. The bus may further connect various other circuits such as peripheral devices, voltage stabilizers and power management circuits together, which are known in the art and will therefore not be further described here. A bus interface provides an interface between the bus and a transceiver. The transceiver may be one element or a plurality of elements, such as a plurality of receivers and transmitters, which provide units for communicating with various other apparatuses on transmission media. Data processed by the processors 1001 is transmitted on wireless media through antennas, and furthermore, the antennas also receive the data and transmit the data to the processors 1001.

The processors 1001 are in charge of bus management and usual processing, and also may provide various functions including timing, peripheral interfaces, voltage regulation, power management and other control functions. The memory 1002 may be used for storing data used when the processors 1001 execute operations.

In still yet another aspect, an embodiment of the present disclosure further provides a computer-readable storage medium on which computer programs are stored. The computer program, when executed by a processor, causes the processor to implement the above method embodiments.

That is, those skilled in the art should understand that all or part of operations in the methods in the above embodiments may be completed by instructing related hardware by the program, and the program is stored in a storage medium, which includes a plurality of instructions used for enabling a device (may be a single-chip microcomputer or a chip) or the processor to implement all or part of the operations of the method in each embodiment. The above memory medium includes: a USB flash drive, a mobile hard disk drive, a read-only memory (ROM), a random access memory (RAM), a magnetic disk, a compact disk and other various media on which program codes can be stored.

Those ordinarily skilled in the art should understand that the above embodiments are specific embodiments realizing the present disclosure, however, various changes can be made to the embodiments in form and details in practical application without departing from the spirit and scope of the present disclosure.

## Claims

1. A method for displaying browser pages, applied to a proxy server comprising a remote browser, and comprising:
acquiring first pixel data corresponding to change regions according to a page currently displayed by the remote browser;
compressing the first pixel data to obtain second pixel data;
sending the second pixel data to a client, such that the client displays a corresponding browser page according to the second pixel data;
acquiring third pixel data corresponding to the change regions according to the page currently displayed by the remote browser, the third pixel data being configured to supplement pixels lost when compressing the first pixel data; and
sending the third pixel data to the client, such that the client displays a corresponding browser page according to the third pixel data.

2. The method for displaying the browser pages according to claim 1, wherein the method further comprises:
before compressing the first pixel data, determining a compression rate according to a current working pressure of the proxy server, the working pressure comprising at least one of a transmission pressure and a processing pressure; and
compressing the first pixel data comprises:
compressing the first pixel data according to the compression rate.

3. The method for displaying the browser pages according to claim 2, wherein the working pressure comprises the transmission pressure, and the method further comprises at least one of:
updating the transmission pressure according to a sending condition of the second pixel data after sending the second pixel data, and
updating the transmission pressure according to a sending condition of the third pixel data after sending the third pixel data.

4. The method for displaying the browser pages according to claim 2 or claim 3, wherein the working pressure comprises the processing pressure;
the method further comprises:
before acquiring the first pixel data corresponding to the change regions according to a page currently displayed by the remote browser, adding first tasks to a preset first task queue after determining that the change regions are available; the first tasks being configured to trigger corresponding instructions to perform acquiring the first pixel data corresponding to the change regions corresponding to the currently-acquired first tasks according to a page currently displayed by the remote browser; and
the method further comprises:
before determining the compression rate according to a current working pressure of the proxy server, determining the processing pressure according to the quantity of the first tasks in the first task queue.

5. The method for displaying the browser pages according to claim 2 or claim 3, wherein the working pressure comprises the processing pressure, and the method further comprises:
before determining the compression rate according to a current working pressure of the proxy server, determining the processing pressure according to sizes of all the change regions in which no corresponding first pixel data is acquired currently.

6. The method for displaying the browser pages according to any one of claims 1 to 5, wherein the method further comprises:
before generating third pixel data according to the page currently displayed by the remote browser, adding second tasks to a preset second task queue after determining that the change regions are available; and
acquiring the third pixel data corresponding to the change regions according to the page currently displayed by the remote browser, comprises:
acquiring the second tasks from the second task queue based on a timer; and
triggering corresponding instructions according to the currently-acquired second tasks to execute acquiring the third pixel data corresponding to the change regions according to the page currently displayed by the remote browser.

7. The method for displaying the browser pages according to claim 6, wherein acquiring the second tasks from the second task queue based on the timer, comprises:
acquiring the second tasks from the second task queue after the timer is triggered; and
the method further comprises:
after triggering the corresponding instructions according to the currently-acquired second tasks to execute acquiring the third pixel data corresponding to the change regions according to the page currently displayed by the remote browser, detecting whether at least one second task is cached in the second task queue; and
in response to the at least one second task being cached in the second task queue, acquiring a next second task from the second task queue to trigger a corresponding instruction till no second task is cached in the second task queue.

8. The method for displaying the browser pages according to any one of claims 1 to 7, wherein the method further comprises:
before acquiring the third pixel data corresponding to the change regions according to the page currently displayed by the remote browser, detecting whether delay exists between the page currently displayed by the remote browser and a page displayed when acquiring, by the remote browser, the first pixel data corresponding to the change regions; and
acquiring the third pixel data corresponding to the change regions according to the page currently displayed by the remote browser, comprises:
in response to no delay existing, acquiring the third pixel data corresponding to the change regions according to the page currently displayed by the remote browser.

9. The method for displaying the browser pages according to claim 8, wherein the method further comprises:
in response to delay existing between the page currently displayed by the remote browser and the page displayed when acquiring, by the remote browser, the first pixel data corresponding to the change region, acquiring the third pixel data corresponding to a next change region according to the page currently displayed by the remote browser.

10. The method for displaying the browser pages according to any one of claims 1 to 9, wherein the method further comprises:
before acquiring the third pixel data corresponding to the change regions according to the page currently displayed by the remote browser, dividing the change regions to obtain a plurality of tile regions; and
sequentially acquiring the third pixel data corresponding to each tile region according to the page currently displayed by the remote browser.

11. The method for displaying the browser pages according to any one of claims 1 to 10, wherein the method further comprises:
before acquiring first pixel data corresponding to a change region relative to a previous displayed page according to the page currently displayed by the remote browser, monitoring a page change event, the page change event comprising at least one of a source station loading event and a user interaction event associated with page change; and
after the page change event is detected, determining the change regions corresponding to the page change event.

12. A method for displaying browser pages, applied to a client comprising a local browser, and comprising:
receiving second pixel data;
replacing and displaying change regions as the second pixel data in a page currently displayed by the local browser;
receiving third pixel data; and
displaying a to-be-displayed browser page in the local browser according to the third pixel data;
pixel data corresponding to the change regions in the to-be-displayed browser page being first pixel data, the second pixel data being compressed data of the first pixel data, and the third pixel data being configured to supplement pixels lost when compressing the first pixel data.

13. The method for displaying the browser pages according to claim 12, wherein the pixel data corresponding to the page currently displayed by the local browser comprises another second pixel data or another third pixel data.

14. An electronic device, comprising:
at least one processor; and
a memory, configured to be in communication connection with the at least one processor; wherein
the memory stores instructions capable of being executed by the at least one processor, and the instructions, when executed by the at least one processor, cause the at least one processor to implement the method for displaying the browser pages according to any one of claims 1 to 11 or the method for displaying the browser pages according to claim 12 or claim 13.

15. A computer-readable storage medium, storing a computer program thereon, wherein the computer program, when executed by a processor, causes the processor to implement the method for displaying the browser pages according to any one of claims 1 to 11 or the method for displaying the browser pages according to claim 12 or claim 13.
